# EUROPÄISCHE PATENTSCHRIFT

(11) **EP 3 429 446 B1**
(45) Veröffentlichungstag und Bekanntmachung des Hinweises auf die Patenterteilung: **18.12.2019**
(21) Anmeldenummer: 17727467.7
(22) Anmeldetag: 11.02.2017
(51) Int. Cl.: A47J 43/046

(54) **STEUERUNGSMODUL FÜR EIN NAHRUNGSMITTELZUBEREITUNGSGERÄT**
CONTROL MODULE FOR A DEVICE FOR PREPARING FOODSTUFFS
MODULE DE COMMANDE POUR UN APPAREIL DE PRÉPARATION DE PRODUITS ALIMENTAIRES

(30) Priorität: 18.03.2016 DE 202016001811 U
(43) Veröffentlichungstag der Anmeldung: 23.01.2019
(73) Patentinhaber: WIK Far East Ltd., North Point, Hong Kong (CN)
(72) Erfinder: NEHRING, Martin, 47269 Duisburg (DE); KLOTZBACH, Harald, 47475 Kamp-Lintfort (DE)
(74) Vertreter: Haverkamp, Jens
(86) Internationale Anmeldenummer: PCT/DE2017/000026
(87) Internationale Veröffentlichungsnummer: WO 2017/157361

(56) Entgegenhaltungen:
- DE-U1-202005 021 537

## Beschreibung

Die gegenständliche Erfindung betrifft ein Gerät zur Zubereitung und/oder Erwärmung eines flüssigen Nahrungsmittels. Das Gerät ist zur Zubereitung von Lebensmitteln und/oder zur Erwärmung von Wasser vorgesehen.

Die vorgenannten Getränke basieren auf dem gewünschten Ergebnis, dem Benutzer eine möglichst leichte, intuitive Bedienung des Geräts zu ermöglichen.

Üblicherweise müssen zur Bedienung eines solchen Gerätes Knöpfe oder Tasten betätigt werden um die gewünschte Einstellung zu aktivieren.

Nach Betätigung der Auswahltasten initiieren die nach dem Stand der Technik bekannten Geräte den vom Benutzer gewünschten Vorgang.

Durch die Vielzahl an Auswahlmöglichkeiten auf den bekannten Geräten sind viele Anwender mit der Bedienung eines solchen Gerätes leicht überfordert.

### Zielsetzung der Erfindung

Die vorliegende Erfindung zielt darauf ab, den vorgenannten Nachteil von allseits bekannten Geräten zur Zubereitung von Getränken zu verbessern. Es soll durch die Erfindung ein Getränkezubereitungsgerät offenbart werden, welches für die einfache Bedienung optimiert ist. Dies ist nur möglich, wenn die Steuerung des Gerätes für den Benutzer vereinfacht wird und die Anzahl der Auswahltasten möglichst gering gehalten wird. Dennoch soll dem Benutzer nicht der Funktionsumfang eines solchen Gerätes verkleinert werden.

Mit diesem Ziel betrifft die Erfindung ein Gerät für die Erwärmung sowie Zubereitung einer Lebensmittelflüssigkeit, aufweisend:
- Ein Nahrungsmittelzubereitungsbehältnis zur Aufnahme einer Lebensmittelflüssigkeit
- Eine Basisstation die das Nahrungsmittelzubereitungsbehältnis mit Strom versorgt
- Einen 3-axialen Digitalkompass im Boden des Nahrungsmittelzubereitungsbehältnisses

### Zusammenfassung der Erfindung

Um den Anspruch auf möglichst einfache Bedienung des Geräts zu erfüllen muss auf Auswahltasten gänzlich verzichtet werden. Die Bedienung erfolgt ausschließlich durch Drehung des Nahrungsmittelzubereitungsbehältnisses auf der Basisstation.

Folglich müssen erfindungsgemäß Komponenten verwendet werden, die eine solche Drehbewegung erkennen und die so erhobenen Daten an die verbaute Elektronik übermitteln.

Durch die Verwendung eines 3-axialen Digitalkompasses ist es möglich aufgrund des bestehenden Erdmagnetfeldes die Richtung in welche das Behältnis gedreht wird zu erkennen. Der Richtungssensor nutzt das Erdmagnetfeld zur exakten Bestimmung der Bewegungsrichtung.

Ein solcher Sensor besteht erfindungsgemäß aus zwei Spulen, in welchen das Magnetfeld der Erde kleine Spannungen erzeugt. Je nach Bewegung sind die so auftretenden Spannungen unterschiedlich hoch. Durch einen nichtmagnetischen Widerstand zwischen den beiden Spulen können die Spannungsänderungen erkannt werden.

In Kombination mit einem baromatischen Höhenmesser ist die Bestimmung des Standorts noch genauer. So ist es auch möglich in räumlicher Hinsicht zu bestimmen, in welcher Position sich der in dem Behältnis befindliche Digitalkompass befindet.

Durch Kombination mit einem Beschleunigungssensor ist die Erhebung weiterer Daten möglich. Die Beschleunigungsdaten werden ebenfalls an den Mikrocontroller übermittelt, wodurch eine weitere Variante der Auswahlmöglichkeit für den Benutzer geschaffen wird.

Die von dem Widerstand gemessenen Werte werden an einen Mikroprozessor weiter geleitet. Dieser rechnet die ermittelten Werte um und bildet sie schließlich auf einer Anzeige des Geräts ab.

Die Anzeige kann durch in horizontaler oder vertikaler Richtung angeordnete LEDs verwirklicht werden. Durch mindestens 3 horizontal oder Vertikal angeordnete LEDs kann dem Benutzer die Auswahl des gewünschten Programms dargestellt werden. Alternativ kann auch eine Anzeige des Auswahlprogramms durch von hinten beleuchtete lichtdurchlässige Kunstoffapplikationen erfolgen.

Der 3-axiale Digitalkompass wird direkt in den Boden des Zubereitungsbehältnisses integriert. So kann durch alleinige Drehung des Behältnisses auf der Basisstation eine messbare Veränderung des durch den Sensor ermittelten Zustands registriert werden.

Das Behältnis kann verschiedenen Werkstoffen bestehen. Vorzugsweise sollen Glas, ein nicht rostendes Metall oder ein etwaiger Kunststoff als Basismaterial für das Behältnis dienen. Sofern Kunststoff verwendet wird, kann dieser Kunststoff auch durchsichtig ausgestaltet sein.

Die Erfindung weist eine Basisstation auf, die mittels einer elektrischen Verbindung Kontakt zum Fuß des Behältnisses aufnimmt und auf diese Art die elektrische Versorgung gewährleistet. Diese Ausführungsform geht auf den 2-Komponentenaufbau zurück.

Durch die Verwendung einer Basisstation ist das Nahrungsmittelzubereitungsbehältnis selber kabellos. Die Verbindung zwischen dem Nahrungsmittelzubereitungsbehältnis und der Basisstation wir mittels elektrischer Anschlussstellen hergestellt. Im Boden des Nahrungsmittelzubereitungsbehältnisses befindet sich ein Anschlussteil (female). Auf der Basisstation befindet sich das zugehörige Gegenstück (male).

Die Erwärmung der Lebensmittelflüssigkeit soll mittels Induktionsheizung oder aufgedrucktem Dickschichtheizer erfolgen. Für die Verwirklichung im Rahmen eines später genannten Wasserkochers kann die Erwärmung ebenfalls mittels Heizspiralen erfolgen.

Der Funktionsumfang des Geräts soll für den Benutzer aufgrund der neuartigen Steuerung nicht vermindert werden. So sollen dem Benutzer mindestens drei verschiedene Auswahlstufen zu Verfügung stehen.

Die Erfindung sieht verschiedene Ausführungsbeispiele vor. Ein Ausführungsbeispiel sieht die Verwirklichung der Erfindung in einem Milchaufschäumer vor. Im Rahmen einer Verwirklichung in einem Milchaufschäumer weist das Ausführungsbeispiel einen in dem Nahrungsmittelzubereitungsbehältnis liegenden Rührer auf.

Der Rührer könnte wie in DE 20 2005 021 537 U1 mittels eines DC-Motors angetrieben werden. Durch die Rotation des Motors werden diesem anliegende Magnete in Rotation versetzt, welche den innerhalb der aufzuschäumenden Flüssigkeit liegenden Rührer in Rotation versetzen. Dies ist möglich, da auch der innenliegende Rührer mit Magneten versehen ist und aufgrund dieser Eigenschaft eine Drehbewegung initiiert wird.

Der Rührer kann aus verschiedenen Elementen zusammengesetzt sein. Zum einen kann er aus torusförmigen Windungen aus Draht bestehen. Alternativ kann der Rührer Flügelräder aufweisen, auf welchen die Magnete positioniert sind. Die torusförmigen Windungen können ebenfalls auf einem Trägerelement befestigt sein um dem Rührer die nötige Formstabilität zu geben.

Der Rührer ist lediglich für die Anwendung des Geräts auf ein sogenanntes Positionierungselement zu setzen. Dieses gibt den Standort des Rührers vor und fixiert diesen während des Rührvorgangs.

Das vorgenannte Positionierungselement kann als Erhebung oder Aussparung ausgestaltet sein. Die verwendeten Materialien sollen einen geringen Reibungskoeffizienten aufweisen um die übermäßige Reibung des Rührers zu verhindern. Vorzugsweise ist das Positionierungselement in diesem Ausführungsbeispiel aus einem Stück wie der Behältnisboden gefertigt.

Durch die Verwendung eines 3-axialen Digitalkompasses können unterschiedliche Zubereitungsmodi durch den Benutzer gewählt werden. Dies geschieht durch die Drehung des Behältnisses auf der Basisstation. Beispielsweise ließe sich so die Festigkeit des Milchschaums bestimmen. Ebenfalls besteht die Möglichkeit zu wählen, ob der Schaum kalt oder warm erzeugt werden soll. Die Drehung des Geräts kann auf diese Art zum gleichen Zeitpunkt ein Signal an die in diesem Ausführungsbeispiel vorzugsweise horizontal angeordneten Auswahl LEDs übermitteln, die den Benutzer in der Programmwahl unterstützen.

Bei einer ungeraden Anzahl von Anzeigemitteln soll das mittlere Anzeigemittel eine andere Farbe aufweisen als die horizontal daneben angeordneten Anzeigemittel. Durch diese Differenzierung ist es möglich dem Benutzer die sogenannte "Nullstellung" anzuzeigen.

Dieses Anwendungsbeispiel sieht ebenfalls einen Behältnisdeckel vor. Der Deckel des Behältnisses dient einerseits dem Verschluss des Behältnisses, wenn das Gerät bestimmungsgemäß verwendet wird. So wird vermieden, dass die aufzuschäumende Flüssigkeit über das Behältnis hinaus spritzt oder überläuft.

Ein anderes Ausführungsbeispiel sieht die Verwirklichung der Erfindung in einem Wasserkocher vor. Sofern der 3-axiale Digitalkompass in einem Wasserkocher verwirklicht wird, besteht die Möglichkeit für den Benutzer die gewünschte Temperatur durch Drehung des Nahrungsmittelzubereitungsbehältnisses einzustellen. So besteht die Möglichkeit verschiedene Erhitzungsstufen (beispielsweise 40-60 Grad Celsius für grünen Tee, 70 Grad Celsius für weißen Tee, 70-85 Grad Celsius für gelben Tee, 95 Grad Celsius für schwarzen Tee, 100 Grad Celsius für kochendes Wasser) dem Benutzer zu ermöglichen.

Die Darstellung der Programmwahl kann in diesem Beispiel wie auch bei anderen Wasserkochern üblich, mittels horizontaler Darstellung der Temperatur mittels LEDs oder mittels lichtdurchlässiger Kunststoffapplikationen erfolgen.

Nachfolgend ist die Erfindung anhand eines Ausführungsbeispiels unter Bezugnahme auf die beigefügten Figuren beschrieben. Es zeigen:

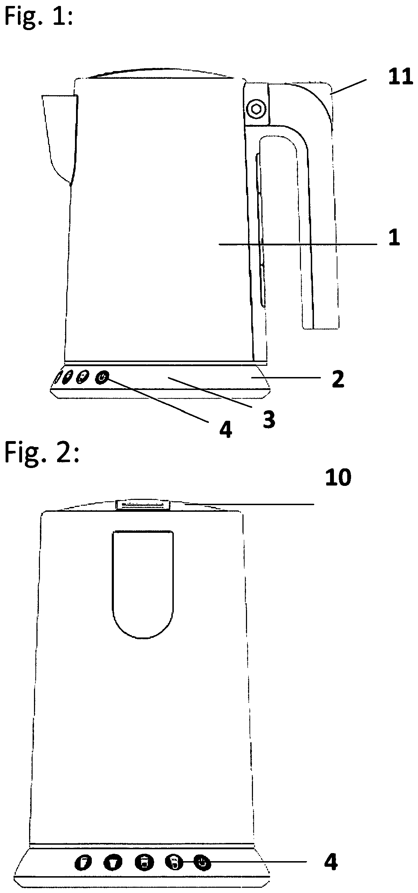

- **Fig. 1:**: Eine Darstellung eines Wasserkochers (11) mit Deckel (10) auf einer Basisstation (2) mit zugehörigen Anzeige-LEDs (4) in der seitlichen Ansicht.
- **Fig. 2:**: Eine Darstellung eines Wasserkochers (11) mit Deckel auf einer Basisstation (2) mit zugehörigen Anzeige-LEDs (4) in der frontalen Ansicht.

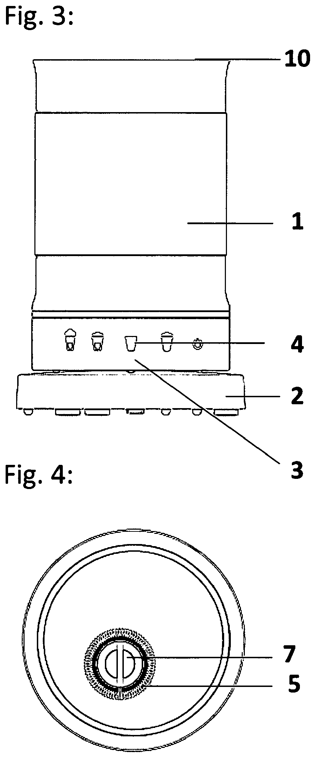

- **Fig. 3:**: Eine Darstellung eines Behältnisses (1) zur Vermengung eines Nahrungsmittelgetränkes auf einer Basisstation (2) mit Anzeige-LEDs (4) welche auf dem Behältnis angeordnet sind in der frontalen Ansicht
- **Fig. 4:**: Eine Darstellung eines Behältnisses (1) zur Vermengung eines Nahrungsmittelgetränkes mit einem innerhalb des Behältnisses angeordneten Rührers (5) in der Ansicht von oben.

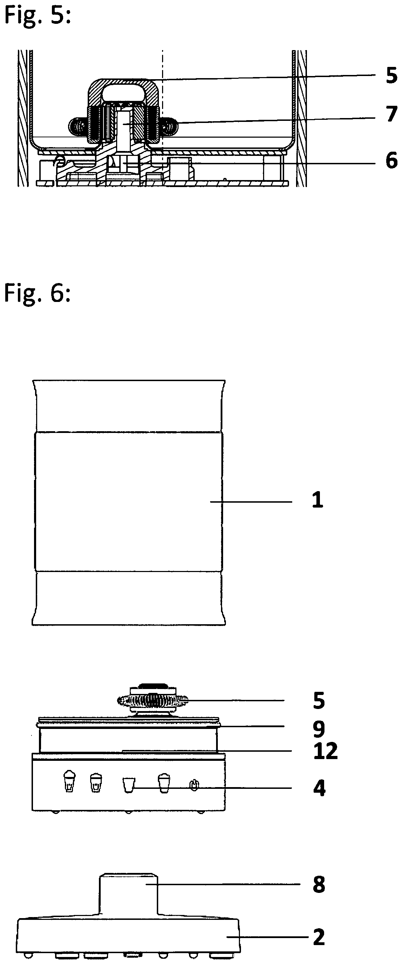

- **Fig. 5:**: Ein Querschnitt eines Behältnisses (1) zur Vermengung eines Nahrungsmittelgetränkes mit einem innerhalb des Behältnisses (1) angeordneten Rührers (5). Ebenfalls zeigt die Darstellung das entsprechende Positionierungselement (7) auf welchem der Rührer (5) angeordnet ist. Unterhalb des Rührers (5) und des Positionierungselements (7) ist der Motor (6), welcher die Rotation des Rührers (5) initiiert angeordnet.
- **Fig. 6:**: Eine frontale Explosionsdarstellung eines Behältnisses (1) zur Vermengung eines Nahrungsmittelgetränkes mit einem innerhalb des Behältnisses (1) angeordneten Rührers (5) mit der Darstellung einer Dichtung (9) welche das Behältnis (1) mit einem daran angeschlossenen Behältnisboden (12) in Verbindung setzt und der zugehörigen elektrischen Anschlussstelle, welche die Basisstation (2) mit dem Fuß des Behältnisses verbindet.

Der offenbarte Digitalkompass (3) ist auf sämtlichen Darstellungen innerhalb des jeweiligen Behältnisses im Behältnisboden angeordnet. Die diesbezügliche Funktionsweise ist dem Stand der Technik nach bekannt und bedarf daher keiner gesonderten Darstellung.

### Bezugszeichenliste:

- 1): Nahrungsmittelzubereitungsbehältnis
- 2): Basisstation
- 3): 3-axialer Digitalkompass (innenliegend)
- 4): LEDs
- 5): Rührer
- 6): Motor
- 7): Positionierungselement
- 8): Elektrische Anschlussstelle
- 9): Dichtung
- 10): Deckel
- 11): Wasserkocher
- 12): Behältnisboden

## Patentansprüche

1. Gerät zur Zubereitung oder Erwärmung eines flüssigen Nahrungsmittels, welches aus zwei Komponenten, nämlich einem Nahrungsmittelzubereitungsbehältnis und einer Basisstation besteht, **dadurch gekennzeichnet, dass** das Getränkezubereitungsbehältnis (1) auf der Basisstation (2) drehbar ist und einen 3-axialen Digitalkompass (3) aufweist, welcher den Drehwinkel und/oder die Drehgeschwindigkeit des Nahrungsmittelzubereitungsbehältnisses (1) erkennt und die Daten an die Geräteelektronik übermittelt.

2. Gerät nach Anspruch 1, **dadurch gekennzeichnet, dass** das Nahrungsmittelbehältnis (1) aus Glas und/oder einem nicht rostenden Metall und/oder Kunststoff, welcher wahlweise durchsichtig ist, besteht.

3. Gerät nach Anspruch 1, **dadurch gekennzeichnet, dass** dem Benutzer mindestens drei Temperaturwahlstufen und/oder Zubereitungsmodi zur Verfügung stehen.

4. Gerät nach Anspruch 1, **dadurch gekennzeichnet, dass** auf der Vorderseite des Nahrungsmittelzubereitungsbehältnisses (1) mindestens drei LEDs (4) in horizontaler oder in vertikaler Richtung angeordnet sind, welche die Temperaturwahlstufe und/oder die Zubereitungsmodi darstellen.

5. Gerät nach Anspruch 1 und Anspruch 3, **dadurch gekennzeichnet, dass** die mittlere von einer ungeraden Anzahl horizontal angeordneter LEDs (4) eine alternative Farbe im Verhältnis zu den rechts und links der mittleren LED angeordneten LED aufweist.

6. Gerät nach Anspruch 1, **dadurch gekennzeichnet, dass** das Nahrungsmittelzubereitungsbehältnis (1) einen innerhalb des Behältnisses liegenden, mit Magneten versehenen Rührer (5) aufweist.

7. Gerät nach Anspruch 6, **dadurch gekennzeichnet, dass** der mit Magneten versehene Rührer (5) durch einen unterhalb des Nahrungsmittelzubereitungsbehältnisses (1) liegenden, mit Magneten versehenen Motors (6) angetrieben wird.

8. Gerät nach Anspruch 6 und Anspruch 7, **dadurch gekennzeichnet, dass** innerhalb des Behältnisses ein Positionierungselement (7) angeordnet ist, welches den Rührer (5) stabilisiert und zu diesem komplementär ist.

9. Gerät nach Anspruch 8, **dadurch gekennzeichnet, dass** das Positionierungselement (7) sowie der Boden des Nahrungsmittelzubereitungsbehältnisses (1) aus einem Stück gefertigt sind.

10. Gerät nach Anspruch 8 und Anspruch 9, **dadurch gekennzeichnet, dass** der Rührer (5) eine ringförmige Gestalt mit einer Aussparung aufweist, welche so ausgestaltet ist, um mit dem Positionierungsmittel (7) in Verbindung gesetzt zu werden.

11. Gerät nach einem der vorgenannten Ansprüche, **dadurch gekennzeichnet, dass** die Basisstation (2) mittels einer elektrischen Anschlussstelle (8) mit dem Nahrungsmittelzubereitungsbehältnis (1) verbunden ist.

12. Gerät nach einem der vorgenannten Ansprüche, **dadurch gekennzeichnet, dass** die Basisstation (2) ein elektrisches Energieversorgungsmittel (9) aufweist.

13. Gerät nach einem der vorgenannten Ansprüche, **dadurch gekennzeichnet, dass** das Nahrungsmittel durch eine Induktionsheizung, oder einen Dickschichtheizer erhitzt wird.

14. Gerät nach einem der vorgenannten Ansprüche, **dadurch gekennzeichnet, dass** das Nahrungsmittelzubereitungsbehältnis (1) einen Deckel (10) aufweist.

15. Gerät nach Anspruch 1, **dadurch gekennzeichnet, dass** es sich bei dem erfindungsgemäßen Gerät um einen Milchaufschäumer handelt.

16. Gerät nach Anspruch 1, **dadurch gekennzeichnet, dass** es sich bei dem erfindungsgemäßen Gerät um einen Wasserkocher (11) handelt.

17. Gerät nach Anspruch 1, **dadurch gekennzeichnet, dass** es sich bei dem erfindungsgemäßen Gerät um ein Gerät zur Vermengung eines Getränkeextraktes und Wasser (11) handelt.

## Claims

1. Device for preparing or heating a liquid foodstuff, consisting of two components, specifically a foodstuff preparation container and a base station, **characterised in that** the drink preparation container (1) can be rotated on the base station (2) and comprises a triple axis digital compass (3) which identifies the angle of rotation and/or the speed of rotation of the foodstuff preparation container (1) and transmits the data to the device electronics unit.

2. Device according to claim 1, **characterised in that** the foodstuff preparation container (1) consists of glass and/or a rust-resistant metal and/or plastic, which is optionally transparent.

3. Device according to claim 1, **characterised in that** at least three temperature selection stages and/or preparation modes are available to the user.

4. Device according to claim 1, **characterised in that** on the front side of the foodstuff preparation container (1) at least three LED's (4) are arranged in a horizontal or vertical direction, which represent the temperature selection stage and/or the preparation modes.

5. Device according to claim 1 and claim 3, **characterised in that** the middle of an odd number of horizontally-arranged LED's (4) exhibits an alternative colour in relation to the LED's arranged to the right and left of the middle LED.

6. Device according to claim 1, **characterised in that** the foodstuff preparation container (1) comprises a stirrer (5) located inside the container and provided with magnets.

7. Device according to claim 6, **characterised in that** the stirrer (5) provided with magnets is driven by a motor (6) provided with magnets and located beneath the foodstuff preparation container (1).

8. Device according to claim 6 and claim 7, **characterised in that** a positioning element (7) is arranged inside the container, which stabilises the stirrer (5) and is complementary to it.

9. Device according to claim 8, **characterised in that** the positioning element (7) and the base of the foodstuff preparation container (1) are made of one piece.

10. Device according to claim 8 and claim 9, **characterised in that** the stirrer (5) exhibits a ring-shaped overall design with a cut-out opening, which is configured so as to be connected to the positioning means (7).

11. Device according to any one of the preceding claims, **characterised in that** the base station (2) is connected by means of an electrical connection point (8) to the foodstuff preparation container (1).

12. Device according to any one of the preceding claims, **characterised in that** the base station (2) comprises an electrical energy supply means (9).

13. Device according to any one of the preceding claims, **characterised in that** the foodstuff is heated by induction heating or a thick-film heater.

14. Device according to any one of the preceding claims, **characterised in that** the foodstuff preparation container (1) comprises a lid cover (10).

15. Device according to claim 1, **characterised in that** the device according to the invention is a milk frother.

16. Device according to claim 1, **characterised in that** the device according to the invention is a water boiler (11).

17. Device according to claim 1, **characterised in that** the device according to the invention is a device for the mixing of a drink extract and water (11).

## Revendications

1. Appareil de préparation ou de chauffage d'un aliment liquide, constitué de deux éléments, à savoir un récipient de préparation des aliments et une station de base, **caractérisé en ce que** le récipient (1) de préparation des boissons est rotatif sur la station de base (2) et présente une boussole numérique (3) triaxiale, qui identifie l'angle de rotation et/ou la vitesse de rotation du récipient (1) de préparation des aliments et transmet les données à l'électronique de l'appareil.

2. Appareil selon la revendication 1, **caractérisé en ce que** le récipient (1) d'aliments est constitué de verre et/ou d'un métal inoxydable et/ou de matière plastique qui, au choix, peut être transparent.

3. Appareil selon la revendication 1, **caractérisé en ce que** l'utilisateur dispose d'au moins trois niveaux de sélection de température et/ou modes de préparation.

4. Appareil selon la revendication 1, **caractérisé en ce qu'**au moins trois DEL (4) sont disposées dans le sens horizontal ou vertical sur la face avant du récipient (1) de préparation des aliments, lesquelles représentent le niveau de température sélectionné et/ou les modes de préparation.

5. Appareil selon la revendication 1 et la revendication 3, **caractérisé en ce que** la DEL (4) centrale de celles disposées horizontalement en nombre impair, a une couleur alternative par rapport aux DEL disposées à droite et à gauche de la DEL centrale.

6. Appareil selon la revendication 1, **caractérisé en ce que** le récipient (1) de préparation des aliments présente un mélangeur (5) muni d'aimants, situé à l'intérieur du récipient.

7. Appareil selon la revendication 6, **caractérisé en ce que** le mélangeur (5) muni d'aimants est entraîné par un moteur (6) muni d'aimants situé sous le récipient (1) de préparation des aliments.

8. Appareil selon la revendication 6 et la revendication 7, **caractérisé en ce qu'**est disposé à l'intérieur du récipient, un élément de positionnement (7), lequel stabilise le mélangeur (5) et est complémentaire à ce dernier.

9. Appareil selon la revendication 8, **caractérisé en ce que** l'élément de positionnement (7) ainsi que le fond du récipient (1) de préparation des aliments sont fabriqués d'un seul tenant.

10. Appareil selon la revendication 8 et la revendication 9, **caractérisé en ce que** le mélangeur (5) présente une forme annulaire avec un évidement, conçu de manière à pouvoir être raccordé à l'élément de positionnement (7).

11. Appareil selon l'une des revendications précédentes, **caractérisé en ce que** la station de base (2) est raccordé au récipient (1) de préparation des aliments au moyen d'un raccord électrique (8).

12. Appareil selon l'une des revendications précédentes, **caractérisé en ce que** la station de base (2) présente une alimentation en énergie (9) électrique.

13. Appareil selon l'une des revendications précédentes, **caractérisé en ce que** l'aliment est chauffé par un chauffage par induction ou par une résistance à film épais.

14. Appareil selon l'une des revendications précédentes, **caractérisé en ce que** le récipient de préparation des aliments (1) présente un couvercle (10).

15. Appareil selon la revendication 1, **caractérisé en ce que** l'appareil selon l'invention est un mousseur de lait.

16. Appareil selon la revendication 1, **caractérisé en ce que** l'appareil selon l'invention est une bouilloire (11).

17. Appareil selon la revendication 1, **caractérisé en ce que** l'appareil selon l'invention est un appareil pour mélanger un extrait de boisson et de l'eau (11).
